# EUROPEAN PATENT APPLICATION

(11) **EP 4 418 663 A1**
(43) Date of publication of application: **21.08.2024**
(21) Application number: 22893160.6
(22) Date of filing: 08.11.2022
(51) Int. Cl.: H04N 21/482, H04N 21/431, H04N 21/436, H04N 21/485, G06F 3/0485

(54) **MOBILE DEVICE AND CONTROL METHOD THEREFOR**

(30) Priority: 10.11.2021 KR 20210154294
(71) Applicant: Samsung Electronics Co., Ltd., Suwon-si, Gyeonggi-do 16677 (KR)
(72) Inventor: KIM, Seokhyun, Suwon-si, Gyeonggi-do 16677 (KR); KIM, Euijun, Suwon-si, Gyeonggi-do 16677 (KR); MOON, Joosun, Suwon-si, Gyeonggi-do 16677 (KR); SEO, Jangwon, Suwon-si, Gyeonggi-do 16677 (KR); SHIM, Ahyeon, Suwon-si, Gyeonggi-do 16677 (KR); HYEON, Sugyeong, Suwon-si, Gyeonggi-do 16677 (KR)
(74) Representative: Appleyard Lees IP LLP
(86) International application number: PCT/KR2022/017481
(87) International publication number: WO 2023/085740

(57) **Abstract**

A display device and method are provided. A display device according to an embodiment of the disclosure includes a display, a memory storing one or more instructions, and at least one processor configured to execute the one or more instructions stored in the memory to receive a user input for displaying a list of a plurality of pieces of content which may be reproduced through the display device, when the user input is received, identify a source device providing broadcasting content most recently output through the display from among a plurality of source devices connected to the display device and a channel of the broadcasting content most recently output, and while displaying a screen including the list of the plurality of pieces of content, reproduce, by controlling the identified source device, content of the channel of the broadcasting content most recently output, on at least a portion of the screen.

## Description

### Technical Field

The disclosure relates to a display device and an operating method thereof. In particular, the disclosure relates to a method of providing broadcasting content and a display device for providing broadcasting content.

### Background Art

Recently, the number of pieces of content reproduced by display devices has increased. For example, not only airwave broadcasting or cable broadcasting, but also the number of over-the-top (OTT) media service applications providing various types of media content through the Internet has increased.

As the number of selectable pieces of content is increased, most display devices provide a separate user interface page for content selection.

However, in order to select a piece of content while content is being viewed, switching to the user interface page has to be additionally performed, and thus, it is not possible to view content while content is being selected.

### Disclosure

### Technical Solution

According to a first aspect of an embodiment of the disclosure, a display device includes a display, a memory storing one or more instructions, and at least one processor configured to execute the one or more instructions stored in the memory to receive a user input for displaying a list of a plurality of pieces of content which may be reproduced through the display device, when the user input is received, identify a source device providing broadcasting content most recently output through the display from among a plurality of source devices connected to the display device and a channel of the broadcasting content most recently output, and while displaying a screen including the list of the plurality of pieces of content, reproduce, by controlling the identified source device, content of the channel of the broadcasting content most recently output, on at least a portion of the screen.

Also, according to a second aspect of an embodiment of the disclosure, a method, performed by a display device, of providing broadcasting content includes receiving a user input for displaying a list of a plurality of pieces of content which may be reproduced through the display device, identifying a source device providing broadcasting content that is most recently output through a display from among a plurality of source devices connected to the display device and a channel of the broadcasting content that is most recently output, and displaying a screen including the list of the plurality of pieces of content when the user input is received, and reproducing, by controlling the identified source device, content of the channel of the broadcasting content that is most recently output, on at least a portion of the screen.

Also, according to a third aspect of an embodiment of the disclosure, a computer-readable recording medium may have recorded thereon a program for executing the method of the second aspect on a computer.

### Description of Drawings

FIG. 1 illustrates a method, performed by a display device, of providing broadcasting content, according to an embodiment of the disclosure.
FIG. 2 is a device diagram of a display device according to an embodiment of the disclosure.
FIG. 3 is a flowchart of an operation, performed by a display device, of providing broadcasting content in a user interface for selecting content, according to an embodiment of the disclosure.
FIG. 4 illustrates a method, performed by a display device, of identifying at least one source device providing pieces of broadcasting content, according to an embodiment of the disclosure.
FIG. 5 illustrates a method, performed by a display device, of displaying broadcasting content of a recent channel, as the display device receives a user input for scrolling a page, according to an embodiment of the disclosure.
FIGS. 6A and 6B illustrate a method, performed by a display device, of moving broadcasting content, according to an embodiment of the disclosure.
FIG. 7 illustrates a method, performed by a display device, of outputting an audio signal of broadcasting content based on a movement position of the broadcasting content, according to an embodiment of the disclosure.
FIGS. 8A and 8B illustrate a method, performed by a display device, of displaying broadcasting content of a recent channel, together with an application, according to an embodiment of the disclosure.
FIG. 9 is a flowchart of a method, performed by a display device, of displaying broadcasting content of a recent channel, according to an embodiment of the disclosure.
FIGS. 10A and 10B illustrate a method, performed by a display device, of displaying broadcasting content of a recent channel, according to an embodiment of the disclosure.
FIG. 11 is a block diagram of a display device according to an embodiment of the disclosure.

### Mode for Invention

Hereinafter, an embodiment of the disclosure will be described in detail with reference to the accompanying drawings for one of ordinary skill in the art to easily execute the disclosure. However, the disclosure may have different forms and should not be construed as being limited to the embodiment described herein. Also, in the drawings, parts not related to descriptions are omitted for the clear description of the disclosure, and throughout the specification, like reference numerals are used for like elements.

The terms used in the disclosure are common terms that are currently widely used, in consideration of their function in the disclosure. However, the terms may become different according to an intention of one of ordinary skill in the art, a precedent, or the advent of new technology. Therefore, the terms used in the disclosure should not be interpreted merely by the terms, but should be interpreted based on the meaning of the terms and the content throughout the disclosure.

Also, terms such as "the first," "the second," etc. may be used to describe various components, but the components are not limited by these terms. The terms are used only for distinguishing one component from another component.

Also, the terms used in the disclosure are merely used to describe a predetermined embodiment of the disclosure and are not aimed to limit the disclosure. Unless a singular meaning is apparent contextually, a singular expression may include a plural meaning. In addition, throughout the specification, when a part is referred to as being "connected" to other parts, the part may be "directly connected" to the other parts or may be "electrically connected" to the other parts with other devices therebetween. Furthermore, when a part "includes" a certain element, unless it is specifically mentioned otherwise, the part may further include another component and may not exclude the other component.

The expression "in some embodiments" or "according to an embodiment of the disclosure" described in various parts of this specification does not necessarily refer to the same embodiment.

According to embodiments of the disclosure, a display device for providing broadcasting content and an operating method of the display device are provided.

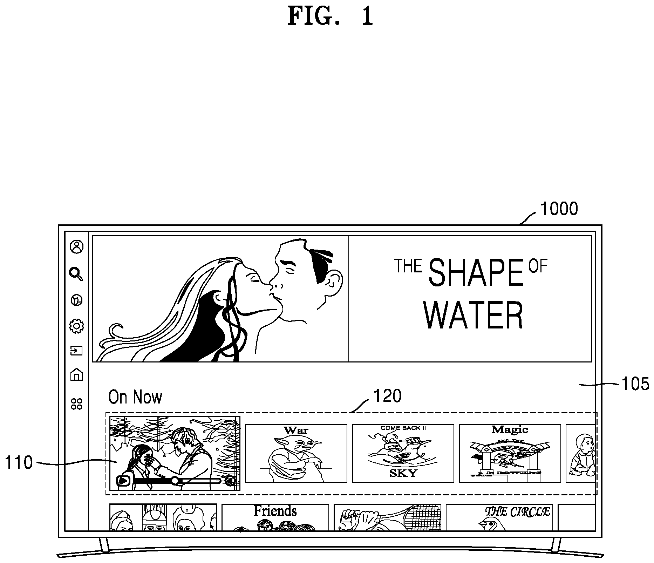

FIG. 1 illustrates a method, performed by a display device, of providing broadcasting content, according to an embodiment of the disclosure.

Referring to FIG. 1, a display device 1000 may provide information about broadcasting content in a home user interface (UI) page 105 configured to select content.

The display device 1000 may receive a user input for displaying the home Ul page 105. The home Ul page 105 may be configured to provide a list of content that can be viewed in the display device 1000. The home UI page 105 may include a list 120 of pieces of broadcasting content. Also, the home UI page 105 may include a list of content that may be synchronized to a device (for example, a game machine) connected to the display device 100. Also, the home UI page 105 may include a list of applications providing content.

When the display device 1000 receives a user input for displaying the home UI page 105, the display device 1000 may reproduce, as one of the list of the broadcasting content, content 110 received from a channel (hereinafter, a recent channel) of broadcasting content that is most recently output. A content reproduction image displayed as identification information of content or identification information of a channel may be referred to as a picture in guide (PIG).

For example, when the display device 1000 receives the user input for displaying the home Ul page 105 while outputting broadcasting content, the display device 1000 may reproduce, on the home UI page 105, as one of selectable pieces of content, the broadcasting content 110 that is being viewed. Accordingly, a user may continually view the content that is being viewed, while the user selects other content.

Also, for example, when the user input for displaying the home UI page 105 or a user input for turning on the display device 1000 is received while content of an over-the-top (OTT) application is being output, the display device 1000 may reproduce the content 110 that is received from a broadcasting channel lastly output from among previously output broadcasting channels.

Accordingly, a user may view content of a channel in which the user was interested, while watching a list of pieces of content, and may relatively more easily select an interest channel.

Also, according to an embodiment, when the display device 1000 displays the list 120 of broadcasting content, the display device 1000 may display identification information of a recent channel by distinguishing the identification information of the recent channel from identification information of the remaining channels. For example, referring to FIG. 1, the display device 1000 may indicate identification information of channels by using images of content received from the channels. In this case, the display device 1000 may indicate the identification information of the recent channel by using a motion image of the content 110 received from the recent channel at a time point at which the home UI is displayed and may indicate the identification information of each of the remaining channels by using a thumbnail image of content received from the channel.

Also, according to an embodiment, the display device 1000 may display the identification information of the recent channel preferentially to the identification information of the remaining channels. For example, referring to FIG. 1, the display device 1000 may first display the motion image of the content 110, which is the identification information of the recent channel, preferentially to the thumbnail images, which are the identification information of the remaining channels.

According to an embodiment, when the display device 1000 receives a user input of selecting the content 110 of the recent channel, the display device 1000 may determine the content 110 of the recent channel as viewing content of the user and may reproduce the viewing content of the user on the entire screen. For example, when a predetermined reference time passes after the content 110 of the recent channel is focused according to the user input, the content that is being reproduced may be reproduced on the entire display portion.

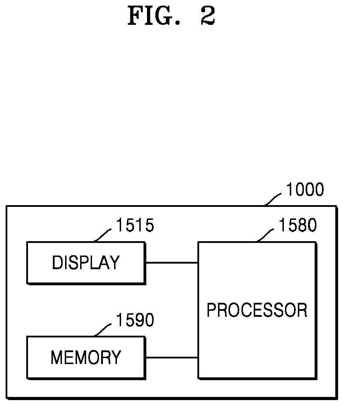

FIG. 2 is a device diagram of a display device according to an embodiment of the disclosure.

Referring to FIG. 2, the display device 1000 may include a display 1515, a memory 1590, and a processor 1580.

The memory 1590 may store various information, data, instructions, programs, etc. required for operations of the display device 1000. The memory 1590 may store one or more instructions.

The processor 1580 may be configured to control general operations of the display device 1000. The processor may be configured to execute the one or more instructions stored in the memory 1590 to control the components of the display device 1000.

The display 1515 may display information processed by the display device 1000 according to control by the processor 1580. For example, the display 1515 may display a UI or a graphics UI (GUI) for controlling the display device 1000. Also, the display 1515 may output video data of content in the form of an image.

According to an embodiment, the processor 1580 may identify at least one source device receiving pieces of broadcasting content from among a plurality of source devices connected to the display device 1000.

According to an embodiment, the processor 1580 may receive, through a user inputter (not shown), a user input for displaying a list of a plurality of pieces of content which may be reproduced through the display device 1000.

According to an embodiment, when the processor 1580 receives a user input, the processor 1580 may identify a source device providing broadcasting content most recently output through the display from among the plurality of source devices connected to the display device 1000 and a channel of the broadcasting content that is output.

According to an embodiment, while the processor 1580 displays a screen including a list of a plurality of pieces of content, the processor 1580 may control the identified source device to reproduce, on at least a portion of the screen, content of the channel of the broadcasting content that is most recently output.

Also, according to an embodiment, when the processor 1580 receives a user input of selecting the reproduced content, the processor 1580 may reproduce the content on the entire screen.

The display device 1000 may include all of electronic devices which may visually output video content. In detail, the display device 1000 may include a television (TV), a digital broadcasting terminal, a tablet personal computer (PC), a smartphone, a mobile phone, a computer, a notebook computer, etc. Also, the display device 1000 may include not only a stationary type, but also may include a mobile type or a portable type.

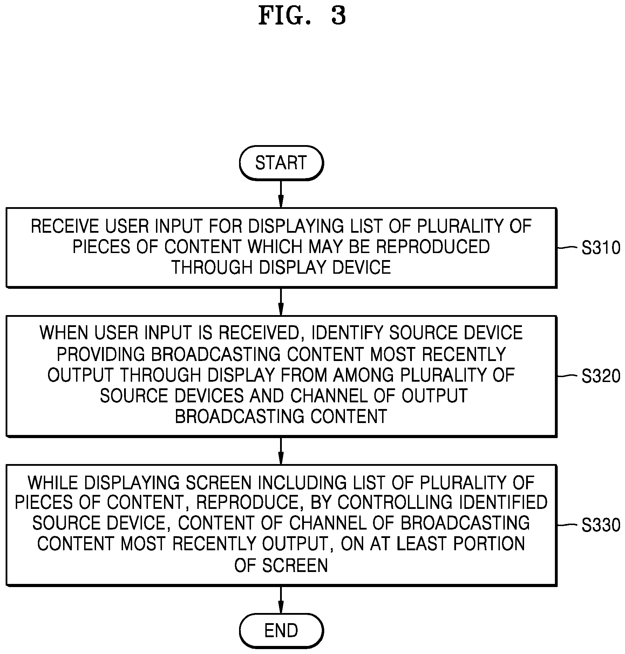

FIG. 3 is a flowchart of an operation, performed by a display device, of providing broadcasting content in a UI for selecting content, according to an embodiment of the disclosure.

In operation S310, the display device 1000 may receive a user input for displaying a list of a plurality of pieces of content which may be reproduced through the display device 1000.

The user input for displaying the list of the plurality of pieces of content which may be reproduced through the display device 1000 may include, but is not limited to, a user input of pressing a home UI button of a remote controller.

In operation S320, when the display device 1000 receives a user input, the display device 1000 may identify a source device providing broadcasting content most recently output through the display from among the plurality of source devices connected to the display device 1000 and a channel of the broadcasting content that is output.

According to an embodiment, the display device may identify, based on data received from the plurality of source devices, a source device transmitting electronic program guide (EPG) information as the at least one source device receiving pieces of broadcasting content.

According to another embodiment, the display device 1000 may receive, from a plurality of source devices, identification information indicating types of the devices and may identify, based on the identification information, one or more source devices receiving pieces of broadcasting content.

The display device 1000 may identify, from among the identified one or more source devices, a source device providing broadcasting content most recently output through a display, and a channel of the output broadcasting content.

Based on user's channel selection, the display device 1000 may pre-store viewing information. For example, when the display device 1000 receives a user input of changing the channel, the display device 1000 may store identification information of the changed channel and identification information of a source device providing content of the channel. Accordingly, the display device 1000 may obtain identification information of the source device providing the broadcasting content most recently output and identification information of the channel of the output broadcasting content.

According to an embodiment, the display device 1000 may determine a recent channel by taking into account a user's viewing history. For example, the display device 1000 may determine the recent channel by taking into account the day of the week and the time at which a user input of displaying a list of content is received. To this end, the display device 1000 may store the recently output channel correspondingly to the days of the week and the time. For example, when a channel 100 is output from a first source on 7 p.m. on Tuesday, the display device 1000 may store the first source and the channel 100 correspondingly to 7 p.m. on Tuesday. Thereafter, when the display device 1000 receives the user input of displaying the list of content on 7 p.m. on next Tuesday, the display device 1000 may obtain, as the source device of the recent channel and the channel stored correspondingly to 7 p.m. on Tuesday, the first source and the channel 100, and may reproduce, by controlling the first source, content received from the channel 100 on a portion of the home UI page, together with the list of content.

In operation S330, while the display device 1000 may display a screen including a list of a plurality of pieces of content, the display device 1000 may reproduce, by controlling the identified source device, content of the channel of the most recently output broadcasting content.

Based on the identification information of the source device and the identification information of the channel, the display device 1000 may obtain, by controlling the identified source device, a broadcasting signal of the identified channel. Also, based on the obtained broadcasting signal, the display device 1000 may reproduce broadcasting content of the recent channel.

The list of the plurality of pieces of content may include a list of pieces of broadcasting content received from a plurality of channels. Also, according to an embodiment, the display device 1000 may display the content received from the channel of the broadcasting content most recently output from among the plurality of channels, preferentially to the pieces of content received from the remaining channels.

Also, according to an embodiment, the display device 1000 may receive, through a user inputter, a user input for scrolling the list of the plurality of pieces of content, and when a reproduction portion of content deviates from a display portion of the display while the list of the plurality of pieces of content is being scrolled, the reproduction portion of the content may be moved into the display portion.

Also, according to an embodiment, when the display device 1000 moves the reproduction portion of the content into the display portion, the display device 1000 may display an image indicating a movement direction of the content.

Also, according to an embodiment, the display device 1000 may determine at least one speaker from among a plurality of speakers connected to the display device 1000 based on a movement position of the reproduction portion of the content and may output an audio signal of the content through the determined at least one speaker.

Also, according to an embodiment, when the display device 1000 receives the user input for displaying the list of the plurality of pieces of content, the display device 1000 may reproduce the content on a channel selection portion, and when, after the reproduction portion of the content is moved into the display portion, the display device 1000 receives a user's scroll input to have the channel selection portion appear again, the display device 1000 may move again the reproduction portion of the content into the channel selection portion.

Also, according to an embodiment, when the display device 1000 receives a user input for scrolling the list of the plurality of pieces of content, the display device 1000 may change focus content that is focused from among the plurality of pieces of content, and may determine a size of the reproduction portion and a position of the reproduction portion such that the focus content and the reproduction portion of the content do not overlap each other and may move the reproduction portion of the content into the display portion based on the determined size and position of the reproduction portion.

Also, according to an embodiment, when the display device 1000 receives the user input for displaying the list of the plurality of pieces of content, the display device 1000 may display icons of applications providing the pieces of content, together with the list of the plurality of pieces of content. Also, when the display device 1000 receives a user input of selecting an icon of an application, the display device 1000 may reproduce content received from an identified channel, together with a list of pieces of content provided by the application.

According to an embodiment, when a viewing history is not stored in the display device 1000, the display device 1000 may reproduce broadcasting content of a channel most frequency watched, based on information included in a broadcasting signal, and may reproduce broadcasting content of a channel designated as a popular channel.

When the display device 1000 receives a user input of selecting the reproduced content, the display device 1000 may reproduce the content on the entire screen.

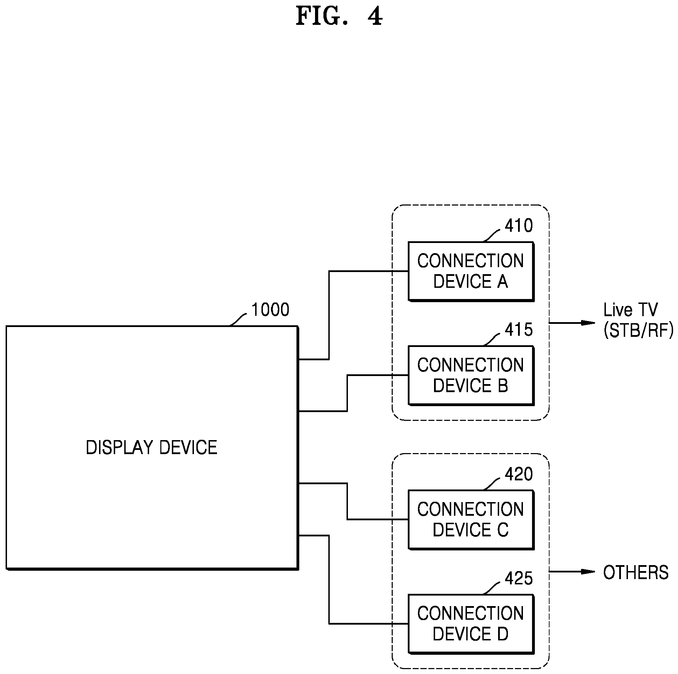

FIG. 4 illustrates a method, performed by a display device, of identifying at least one source device providing pieces of broadcasting content, according to an embodiment of the disclosure.

Referring to FIG. 4, the display device 1000 may be connected to at least one source device providing pieces of broadcasting content.

The at least one source device providing the pieces of broadcasting content may include a tuner (not shown). The tuner (not shown) may select a channel by tuning only a frequency of a channel to be received by the display apparatus 100 from among many frequency components included in a broadcasting signal through amplification, mixing, resonance, etc. on a broadcasting signal received in a wired or wireless manner. For example, the at least one source device receiving the pieces of broadcasting content may include a ground-wave broadcasting receiver, a satellite broadcasting receiver, a cable broadcasting receiver, etc. but is not limited thereto.

The at least one source device providing the pieces of broadcasting content may be integrally provided with the display device 1000 and may be included in the display device 1000, or may be provided as a separate device such as a set-top box and may be connected to the display device 1000 through an inputter/outputter (not shown) of the display device 1000.

According to an embodiment, the display device 1000 may identify at least one source device providing pieces of broadcasting content from among a plurality of source devices connected to the display device 1000.

The display device 1000 may be connected to various devices through the inputter/outputter (not shown). For example, the display device 1000 may be connected to a ground-wave broadcasting set-top box, a cable broadcasting set-top box, a satellite broadcasting set-top box, an Internet broadcasting set-top box, a game machine, a speaker, an OTT set-top box, a multimedia streaming adaptor, etc., but is not limited thereto.

Referring to FIG. 4, the display device 1000 may be connected to a ground-wave receiver 410, a satellite broadcasting set-top box 415, a game machine 420, and a speaker 425. In this case, the ground-wave receiver 410 may be integrally provided with the display device 1000 and may be included in the display device 1000.

According to an embodiment, the display device 1000 may receive, from the plurality of source devices, identification information indicating types of the devices, and may identify, based on the received identification information, at least one source device providing pieces of broadcasting content from among the plurality of source devices.

For example, the display device 1000 may store pieces of identification information of the source devices providing the broadcasting content. The display device 1000 may periodically receive, from a server, the pieces of identification information of the source devices providing the broadcasting content. Accordingly, when the identification information received from the source device is the same as one of the pieces of stored identification information, the display device 1000 may determine the source device transmitting the received identification information as a device providing the broadcasting content.

As another example, the display device 1000 may identify the at least one source device providing the pieces of broadcasting content from among the plurality of source devices, based on information included in data received from the source device. For example, when EPG information is included in the data received from the source device, the display device 1000 may determine the source device transmitting the EPG information as a device providing the pieces of broadcasting content.

Also, as another example, when the display device 1000 receives video data from a source device, outputs a frame based on the received data, and identifies channel information from the frame by image-processing the frame, the display device 1000 may determine the source device transmitting the video data as a device providing the pieces of broadcasting content.

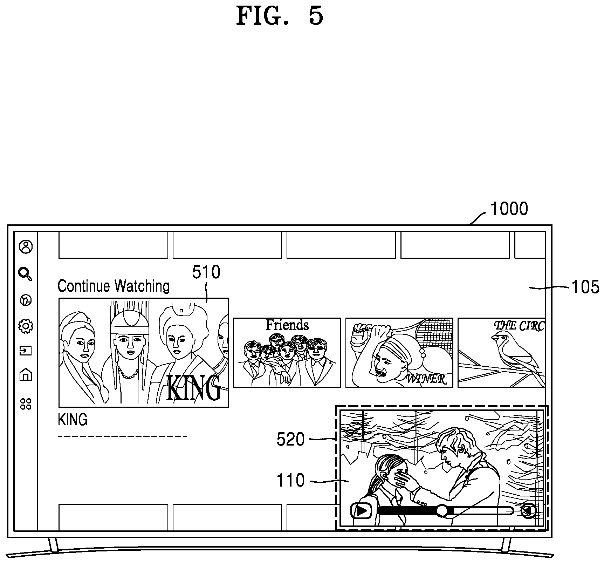

FIG. 5 illustrates a method, performed by a display device, of displaying broadcasting content of a recent channel, as the display device receives a user input for scrolling a page, according to an embodiment of the disclosure.

Referring to FIG. 5, when the display device 1000 receives a user input for scrolling the home UI page 105, the display device 1000 may move the broadcasting content 110 of a recent channel that is being reproduced.

For example, when the home UI page 105 is larger than a display screen, a reproduction portion 520 of the broadcasting content displayed on the page may deviate from a display portion, when the user input for scrolling the page is received. In this case, the display device 1000 may move the reproduction portion 520 of the broadcasting content into the display portion. Thus, even when the page is scrolled, a user may keep watching the broadcasting content. For example, when a user input for scrolling down the page is received, the display device 1000 may move the reproduction portion 520 of the broadcasting content downwards.

According to an embodiment, the display device 1000 may change at least one of a size and a position of the reproduction portion such that focused content 510 and the reproduction portion 520 of the broadcasting content do not overlap each other in the home UI page 105.

The focused content 510 may denote content selected according to a user input (for example, a user's scroll input or input of a direction button), and identification information of the focused content 510 may be displayed by being emphasized so as to be distinguished from identification information of other content.

The display device 1000 may change the size and the position of the reproduction portion such that the focused content 510 and the reproduction portion 520 of the broadcasting content do not overlap each other and may continually reproduce the broadcasting content based on the changed size and position of the reproduction portion.

Also, according to an embodiment, the display device 1000 may display, on the reproduction portion 520 of the broadcasting content, an image or text indicating the broadcasting content received from the recent channel.

Also, according to an embodiment, the display device 1000 may provide a UI for selecting whether or not to reproduce the broadcasting content 110 on the home UI page 105. When the display device 1000 receives, through the Ul, a user input of selecting not to reproduce the broadcasting content 110 on the home UI page 105, the display device 1000 may not reproduce the broadcasting content 110 on the home UI page 105.

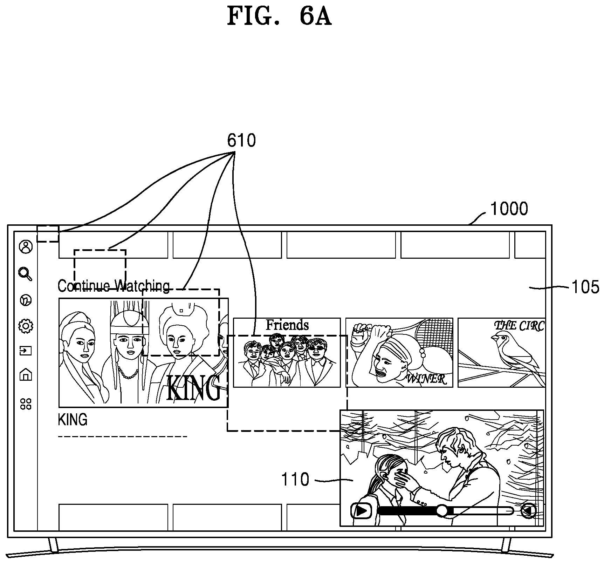

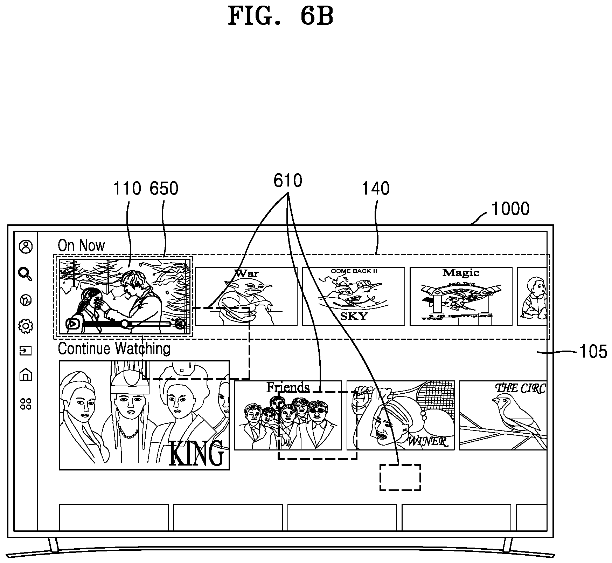

FIGS. 6A and 6B illustrate a method, performed by a display device, of moving broadcasting content, according to an embodiment of the disclosure.

Referring to FIG. 6A, when the broadcasting content 110 is moved, the display device 1000 may display an image 610 indicating a movement direction of the broadcasting content 110.

For example, when a reproduction portion of the broadcasting content 110 is moved from an upper left end to a lower right end of the home UI page 105, the display device 1000 may display the image 610 indicating that the reproduction portion of the broadcasting content 110 is moved from the upper left end to the lower right end.

Referring to FIG. 6B, when, after the home UI page 105 is scrolled, a reproduction portion 650 before the movement according to a user input for scrolling the home UI page 105 enters into the display portion again, the display device 1000 may move the broadcasting content 110 to the reproduction portion 650 before the movement.

Here, the display device 1000 may also display the image 610 indicating a movement direction of the broadcasting content.

When a user input of selecting the broadcasting content 110 is received after the broadcasting content 110 of a recent channel is moved again to a portion 140 on which a list of pieces of broadcasting content is displayed, the display device 1000 may change the reproduction portion of the broadcasting content 110 to the entire display portion.

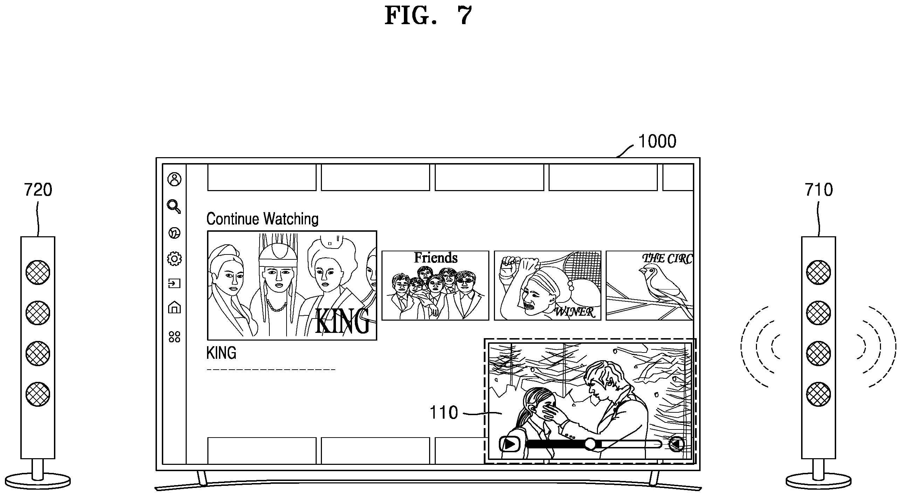

FIG. 7 illustrates a method, performed by a display device, of outputting an audio signal of broadcasting content based on a movement position of the broadcasting content, according to an embodiment of the disclosure.

Referring to FIG. 7, the display device 1000 may determine an output position of the audio signal of the broadcasting content, based on the movement position of the broadcasting content 110.

The display device 1000 may be connected to a plurality of speakers 710 and 720, and the output position of the audio signal may be determined to correspond to each speaker. For example, when a first speaker 710 is connected to a right output signal terminal of the display device 1000, the output position of the first speaker 710 may be the right side. Also, even when only one speaker is connected to the display device 1000, a right built-in speaker and a left built-in speaker may be included in the speaker, and when the right built-in speaker is connected to the right output signal terminal of the display device 1000, the output position of the right built-in speaker may be the right side.

When the reproduction portion of the broadcasting content 110 is moved from the left side to the right side of a display portion, the display device 1000 may output the audio signal through only the right output signal terminal of the plurality of speakers connected to the display device 1000. Thus, the audio signal of the broadcasting content 110 may be output through only the first speaker 710 connected to the right output signal terminal.

Thus, a user may intuitively identify the movement position of the broadcasting content of the recent channel based on the output position of the audio signal.

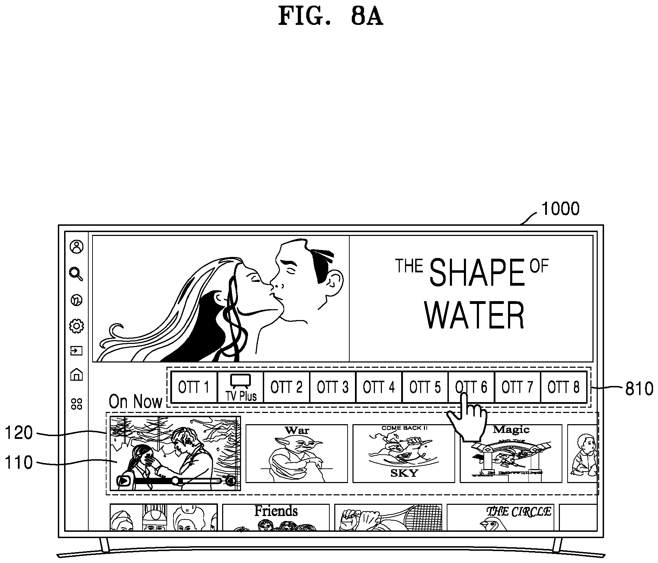

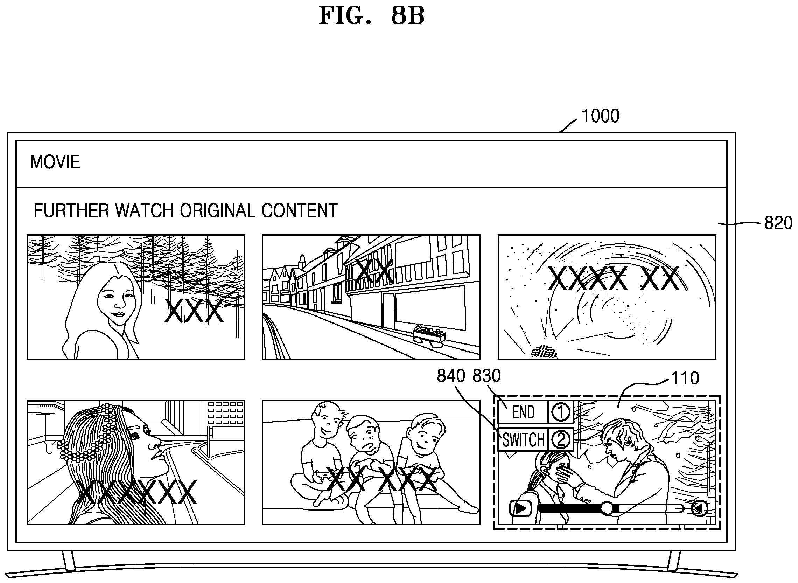

FIGS. 8A and 8B illustrate a method, performed by a display device, of displaying broadcasting content of a recent channel, together with an application, according to an embodiment of the disclosure.

Referring to FIG. 8A, when the display device 1000 receives a user input for displaying the home UI page 105, the display device 1000 may display a list 801 of OTT applications together with the list 120 of the broadcasting content. Also, the display device 1000 may receive a user input of selecting an OTT application.

Referring to FIG. 8B, when the display device 1000 executes the OTT application, the display device 1000 may reproduce the broadcasting content 110 of the recent channel together with content information 820 in the OTT application. Thus, a user may watch the broadcasting content 110 even when the user searches for content in the OTT application.

Also, according to an embodiment, the display device 1000 may reproduce the broadcasting content 110 of the recent channel together with the content of the OTT application, even when the display device 1000 reproduces the content in the OTT application.

According to another embodiment, when the display device 1000 receives a user input of selecting content in the OTT application, the display device 1000 may delete the broadcasting content 110 of the recent channel that is being reproduced and may reproduce the content in the OTT application.

Also, according to an embodiment, when the display device 1000 reproduces the broadcasting content 110 of the recent channel, the display device 1000 may display a UI 830 for deleting the broadcasting content 110 that is being reproduced or a UI 840 for reproducing the broadcasting content that is being reproduced on the entire screen.

In this case, the Uls 830 and 840 for controlling the broadcasting content 110 that is being reproduced may include identification information of corresponding buttons. For example, it may be displayed that the UI 830 for deleting the broadcasting content that is being reproduced may be selected through a button 1 of a remote controller, and the UI 840 for reproducing the broadcasting content that is being reproduced on the entire screen may be selected through a button 2 of the remote controller.

When the display device 1000 receives a user input of selecting the UI 830 for deleting the broadcasting content that is being reproduced, the display device 1000 may delete the broadcasting content that is being reproduced. Also, when the display device 1000 receives a user input of selecting the UI 840 for reproducing the broadcasting content that is being reproduced on the entire screen, the display device 1000 may reproduce the broadcasting content 110 that is being reproduced on the entire screen.

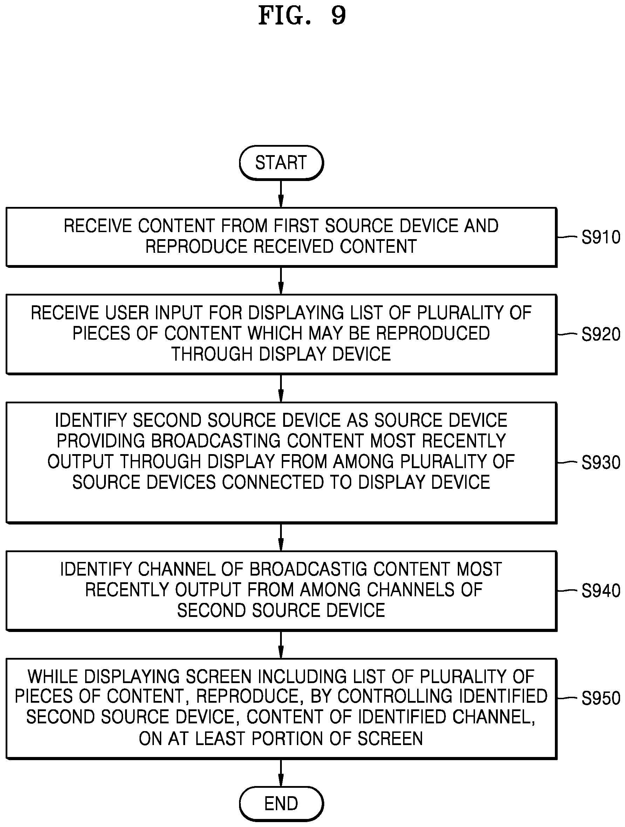

FIG. 9 is a flowchart of a method, performed by a display device, of displaying broadcasting content of a recent channel, according to an embodiment of the disclosure.

In operation S910, the display device 1000 may receive content from a first source device and may reproduce the received content.

The first source device may not include a tuner. For example, the first source device may include a game machine or an OTT set-top box, but is not limited thereto.

In operation S920, the display device 1000 may receive a user input for displaying a list of a plurality of pieces of content which may be reproduced through the display device 1000. Operation S820 may be described by referring to operation S330 of FIG. 3.

In operation S930, the display device 1000 may identify a second source device as a source device providing broadcasting content that is most recently output through a display from among a plurality of source devices connected to the display device 1000.

The display device 1000 may store information about broadcasting content that is most recently output. For example, the information about the broadcasting content most recently output may include identification information of the source device providing the broadcasting content most recently output and identification information of a channel.

Accordingly, based on the information about the broadcasting content most recently output, the display device 1000 may obtain identification information of the second source device as the source device providing the broadcasting content most recently output from among the plurality of source devices.

The second source device may include a tuner. The second source device may include, for example, a ground-wave broadcasting set-top box, a cable broadcasting set-top box, and a satellite broadcasting set-top box, but is not limited thereto.

In operation S940, the display device 1000 may identify a channel of the broadcasting content most recently output from among channels of the second source device.

The display device 1000 may obtain, based on the information about the broadcasting content most recently output, identification information of the channel of the broadcasting content most recently output.

In operation S950, while the display device 1000 displays a screen including the list of the plurality of pieces of content, the display device 1000 may reproduce, by controlling the identified second source device, content of the identified channel, on at least a portion of the screen.

Also, according to an embodiment, the display device 1000 may reproduce, on the home UI page 105, the content of the recent channel or content of the recent channel corresponding to the days of the week and the time, based on whether or not the display device 1000 receives a user input while a user is watching broadcasting content.

For example, when the display device 1000 receives a user input for displaying the home UI page 105 while the display device 1000 outputs the broadcasting content, the display device 1000 may display, on a portion of the home UI page 105, the broadcasting content that is being output. When the display device 1000 receives a user input for displaying the home UI page 105 while the display device 1000 outputs other content (for example, content received from a game machine) than the broadcasting content, the display device 1000 may reproduce the content of the recent channel stored to correspond to the day and the time of a time point at which the user input is received. For example, when the time point at which the user input is received is 7 o'clock on Tuesday, a source device and a channel providing most recent broadcasting content that is output on 7 o'clock Tuesday may be identified, and based on the identified source device and channel, the most recent broadcasting content of the channel that is output on 7 o'clock on Tuesday may be reproduced.

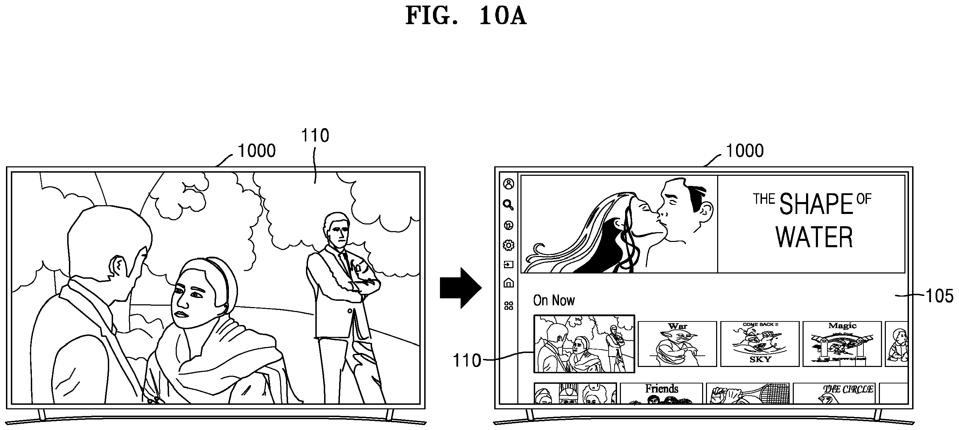

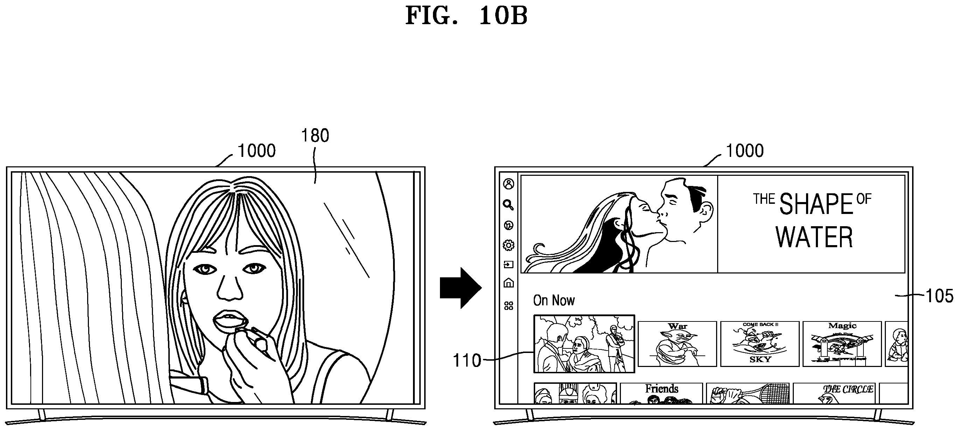

FIGS. 10A and 10B illustrate a method, performed by a display device, of displaying broadcasting content of a recent channel, according to an embodiment of the disclosure.

Referring to FIG. 10A, when the display device 1000 receives a user input for displaying the home UI page 105 while the display device 1000 outputs the broadcasting content 110, the display device 1000 may continually output, on a portion of the home UI page 105, the broadcasting content 110 that is being output.

For example, the display device 1000 may receive the broadcasting content 110 of a channel 100 from a cable broadcasting set-top box and may reproduce the received broadcasting content 110 on the entire display portion. In this case, the display device 1000 may store identification information of the cable broadcasting set-top box, as identification information of a source device providing broadcasting content most recently output. Also, the display device 1000 may store "100" as identification information of a channel of the broadcasting content most recently output.

When the display device 1000 receives the user input for displaying the home UI page 105 while the display device 1000 reproduces the broadcasting content 110, the display device 1000 may identify the cable broadcasting set-top box as the source device providing the broadcasting content most recently output through a display from among a plurality of source devices connected to the display device 1000 and may identify "100" as the identification information of the channel of the broadcasting content most recently output.

While the display device 1000 may display a screen including a list of a plurality of pieces of content, the display device 1000 may reproduce, by controlling the identified cable broadcasting set-top box, content of the identified channel 100 on at least a portion of the screen. Accordingly, a user may continually view the content that the user has been viewing.

Referring to FIG. 10B, when the display device 1000 receives a user input for displaying the home UI page 105 while the display device outputs game content 180 received from a game machine, the display device 1000 may output the broadcasting content 110 of the most recent channel on a portion of the home UI page 105.

For example, the display device 1000 may receive the game content 180 from the game machine and may display the received game content 180 on the entire display portion. This case may correspond to a state in which, before the display device 1000 displays the game content 180, the display device 1000 may receive the broadcasting content 110 of the channel 100 from the cable broadcasting set-top box, and while the display device 1000 reproduces the received broadcasting content 110, the display device 1000 may receive the game content 180 from the game machine according to a user input and may display the received game content 180.

Accordingly, the display device 1000 may store identification information of the cable broadcasting set-top box as identification information of a source device providing broadcasting content most recently output. Also, the display device 1000 may store "100" as identification information of a channel of the broadcasting content most recently output.

When the display device 1000 receives the user input for displaying the home UI page 105 while the display device 1000 reproduces the game content 180, the display device 1000 may identify the cable broadcasting set-top box as the source device providing the broadcasting content most recently output through the display from among the plurality of source devices connected to the display device 1000 and may identify "100" as the identification information of the channel of the broadcasting content most recently output.

While the display device 1000 may display a screen including a list of a plurality of pieces of content, the display device 1000 may reproduce, by controlling the identified cable broadcasting set-top box, content of the identified channel 100 on at least a portion of the screen. Accordingly, a user may continually view content of the channel most recently output.

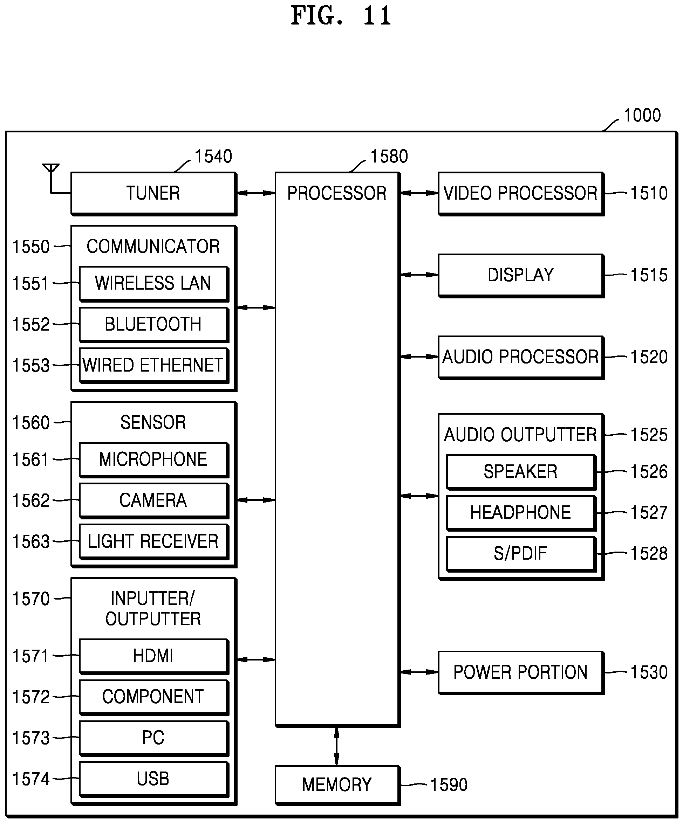

FIG. 11 is a block diagram of a display device according to an embodiment of the disclosure.

Referring to FIG. 11, the display device 1000 may include a video processor 1510, the display 1515, an audio processor 1520, an audio outputter 1525, a power portion 1530, a tuner 1540, a communicator 1550, a sensor 1560, an inputter/outputter 1570, the processor 1580, and the memory 1590.

However, not all of the components illustrated in FIG. 11 are essential components of the display device 1000. The display device 1000 may be realized by including more or less components than the components illustrated in FIG. 11.

The video processor 1510 may process video data received by the display device 1000. The video processor 1510 may perform various image processing operations on the video data, such as decoding, scaling, noise filtering, frame rate conversion, resolution conversion, etc.

The display 1515 may display, on a screen, video included in a broadcasting signal received through the tuner 1540, according to control by the processor 1580. Also, the display 1515 may display content (for example, video) that is input through the communicator 1550 or the inputter/outputter 1570. Also, the display 1515 may output an image stored in the memory 1590, according to control by the processor 1580. Also, the display 1515 may display a UI for controlling the display device 1000.

The audio processor 1520 may process audio data. The audio processor 1520 may perform various processing operations on the audio data, such as decoding, amplification, noise filtering, etc. The audio processor 1520 may include a plurality of audio processing modules for processing audio corresponding to a plurality of pieces of content.

The audio outputter 1525 may output audio included in a broadcasting signal received through the tuner 1540, according to control by the processor 1580. The audio outputter 1525 may output audio (for example, a voice, sound, etc.) that is input through the communicator 1550 or the inputter/outputter 1570. Also, the audio outputter 1525 may output audio stored in the memory 1590, according to control by the processor 1580. The audio outputter 1525 may include at least one of a speaker 1526, a headphone output terminal 1527 or a Sony/Philips digital interface (S/PDIF) output terminal 1528. The audio outputter 1525 may include a combination of the speaker 1526, the headphone output terminal 1527, and the S/PDIF output terminal 1528.

The power portion 1530 may supply power that is input from an external power source to the components 1510 to 1590 in the display device 1000, according to control by the processor 1580. Also, the power portion 1530 may supply power that is output from one or more batteries (not shown) included in the display device 1000 to the components 1510 to 1590 in the display device 1000, according to control by the processor 1580.

The tuner 1540 may tune and select only a frequency of a channel to be received by the display device 1000 from many radio wave components through amplification, mixing, resonance, etc. on a broadcasting signal received in a wired or wireless manner. The broadcasting signal may include audio, video, and additional information (for example, an EPG).

The tuner 1540 may receive the broadcasting signal from a frequency band corresponding to a channel number (for example, a cable broadcasting number 506) according to a control signal received from a user input (for example, an external control device (not shown), such as a remote controller), such as an input of a channel number, an input of upward or downward scrolls through channels, a channel input on an EPG screen, etc.

The tuner 1540 may receive the broadcasting signal from various sources, such as ground-wave broadcasting, cable broadcasting, satellite broadcasting, Internet broadcasting, etc. The tuner 1540 may receive the broadcasting signal from sources, such as analog broadcasting or digital broadcasting. The broadcasting signal received through the tuner 1540 may be decoded (for example, audio-decoded, video-decoded, or additional data-decoded) and divided into audio data, video data and/or additional data. The divided audio, video, and/or additional data may be stored in the memory 1590 according to control by the processor 1580.

The tuner 1540 of the display device 1000 may include a single tuner or a plurality of tuners. According to an embodiment, when the tuner 1540 includes a plurality of tuners, a plurality of broadcasting signals may be output on a plurality of windows included in a multi- window screen provided in the display 1515.

The tuner 1540 may be realized as an all-in-one type with the display device 1000, as an additional device (for example, a set-top box (not shown)) having a tuner electrically connected to the display device 1000, or as a tuner (not shown) connected to the inputter/outputter 1570.

The communicator 1550 may connect the display device 1000 to an external device (for example, an audio device, etc.) according to control by the processor 1580. The processor 1580 may transmit/receive content to and from an external device connected to the processor 1580 through the communicator 1550, may download an application from the external device, or perform web-browsing. In detail, the communicator 1550 may receive content from an external device (not shown) by accessing a network.

As described above, the communicator 1550 may include at least one of a short-range wireless communication module (not shown), a wired communication module (not shown), and a mobile communication module (not shown).

FIG. 11 illustrates a case in which the communicator 1550 includes one of a wireless local area network (LAN) 1551, a Bluetooth communicator 1552, and wired Ethernet 553, as an example.

Also, the communicator 1550 may include a module combination including one or more of the wireless LAN 1551, the Bluetooth communicator 1552, and the wired Ethernet 553. Also, the communicator 1550 may receive a control signal of a controller (not shown) according to control by the processor 1580. The control signal may be realized as a Bluetooth type, a radio frequency (RF) signal type, or a Wi-fi type.

The communicator 1550 may further include other short-range wireless communication (for example, near field communication (NFC) (not shown) and an additional bluetooth low energy (BLE) module (not shown)), in addition to Bluetooth.

The sensor 1560 may sense a voice, an image, or interaction of a user. The sensor 1560 may include, for example, a camera 1562.

The sensor 1560 may include a camera 1562. Also, the sensor 1560 may further include at least one of a microphone 1561 and a light receiver 1563.

The microphone 1561 may receive an uttered voice of a user. The voice received through the microphone 1561 may be converted into an electrical signal and processed by the processor 1580. The user's voice may include, for example, a voice corresponding to a menu or a function of the display device 1000. For example, a recommended recognition range of the microphone 1561 may be within 4 m from the microphone 1561 to a location of the user, and the recognition range of the microphone 1561 may be changed based on a volume of the voice of the user and ambient environment (for example, a speaker sound, an ambient noise, etc.).

The microphone 1561 may be realized as an integral type or a separate type with respect to the display device 1000. The microphone 1561 that is a separate type may be electrically connected to the display device 1000 through the communicator 1550 or the inputter/outputter 1570.

It may be easily understood by one of ordinary skill in the art that the microphone 1561 may be omitted according to the performance and the structure of the display device 1000.

The processor 1580 may select a menu displayed on the display device 1000 by using a result of motion recognition or may perform a control operation corresponding to the result of motion recognition. For example, the control operation may include a channel adjustment, a volume adjustment, a cursor movement, etc.

The camera 1562 may include a lens (not shown) and an image sensor (not shown). The camera 1562 may support optical zooming or digital zooming by using a plurality of lenses and image processing. A recognition range of the camera 1562 may be set in various ways according to an angle of the camera and conditions of an ambient environment. When the camera 1562 includes a plurality of cameras, a three-dimensional still image or a three-dimensional motion may be received by using the plurality of cameras.

The camera 1562 may be realized as an integral type or a separate type with respect to the display device 1000. An additional device (not shown) including the camera 1562 that is a separate type may be electrically connected to the display device 1000 through the communicator 1550 or the inputter/outputter 1570.

It may be easily understood by one of ordinary skill in the art that the camera 1562 may be omitted according to the performance and the structure of the display device 1000.

The light receiver 1563 may receive an optical signal (including a control signal) from an external controller (not shown) through an optical window (not shown) of a bezel of the display 1515. The light receiver 1563 may receive an optical signal corresponding to a user input (for example, a touch input, a press input, a touch gesture, a voice, or a motion) from a controller (not shown). A control signal may be extracted from the received optical signal according to control by the processor 1580.

The inputter/outputter 1570 may receive video (for example, a motion picture, etc.), audio (for example, a voice, music, etc.), and additional data (for example, an EPG, etc.) from the outside of the display device 1000, according to control by the processor 1580. The inputter/outputter 1570 may include one of a high-definition multimedia interface (HDMI) port 1571, a component jack 1572, a personal computer (PC) port 1573, and a universal serial bus (USB) port 1574. The inputter/outputter 1570 may include a combination of the HDMI port 1571, the component jack 1572, the PC port 1573, and the USB port 1574.

It may be easily understood by one of ordinary skill in the art that the structure and the operation of the inputter/outputter 1570 may be realized in various ways according to an embodiment of the disclosure.

The processor 1580 may control general operations of the display device 1000, control signal flows between the components (not shown) included in the display device 1000, and process data. When there is a user input or a condition predetermined and stored is met, the processor 1580 may execute an operation system (OS) stored in the memory 1590 and various applications.

The processor 1580 may include random-access memory (RAM) (not shown) used as a storage for storing signals or data input from the outside of the display device 1000 or as a storage corresponding to various operations performed by the display device 1000, read-only memory (ROM) (not shown) storing control programs for controlling operations by the display device 1000, and a processor (not shown).

The processor (not shown) may include a GPU (not shown) for processing graphics data corresponding to video data. The processor (not shown) may be realized as a system on chip (SoC) combining a core (not shown) and a GPU (not shown). The processor (not shown) may include a single core, a dual core, a triple core, a quad core, and its multiple core.

Also, the processor (not shown) may include a plurality of processors. For example, the processor (not shown) may be realized as a main processor (not shown) and a sub-processor (not shown) operating in a sleep mode.

Machine-readable storage media may be provided as non-transitory storage media. Here, the term "non-transitory storage media" only denotes that the media are tangible devices and do not include signals (e.g., electromagnetic waves), and does not distinguish the storage media semi-permanently storing data and the storage media temporarily storing data. For example, the "non-transitory storage media" may include a buffer temporarily storing data.

According to an embodiment, the method according to various embodiments disclosed in the present specification may be provided as an inclusion of a computer program product. The computer program product may be, as a product, transacted between a seller and a purchaser. The computer program product may be distributed in the form of a machine-readable storage medium (e.g., a compact disc (CD)-ROM) or may be distributed online (e.g., downloaded or uploaded) through an application store or directly between two user devices (e.g., smartphones). In the case of online distribution, at least part of a computer program product (e.g., a downloadable application) may be at least temporarily stored in a machine-readable storage medium, such as a server of a manufacturer, a server of an application store, or a memory of a relay server, or may be temporarily generated.

## Claims

1. A display device (1000) comprising:
a display (1515);
a memory (1590) storing one or more instructions; and
at least one processor (1580) configured to execute the one or more instructions stored in the memory to:
receive a user input for displaying a list of a plurality of pieces of content which may be reproduced through the display device (1000);
when the user input is received, identify a source device providing broadcasting content most recently output through the display (1515) from among a plurality of source devices connected to the display device (1000) and a channel of the broadcasting content most recently output; and
while displaying a screen including the list of the plurality of pieces of content, reproduce, by controlling the identified source device, content of the channel of the broadcasting content most recently output, on at least a portion of the screen.

2. The display device of claim 1, wherein the list of the plurality of pieces of content includes a list of pieces of broadcasting content received from a plurality of channels, and
the at least one processor is further configured to display the content received from the channel of the broadcasting content most recently output from among the plurality of channels, preferentially to the pieces of content received from remaining channels.

3. The display device of any one of claims 1 and 2, further comprising a user inputter,
wherein the at least one processor is further configured to:
receive, through the user inputter, a user input for scrolling the list of the plurality of pieces of content; and,
when a reproduction portion of the content deviates from a display portion of the display while the list of the plurality of pieces of content is being scrolled, move the reproduction portion of the content into the display portion.

4. The display device of claim 3, wherein the at least one processor is further configured to display an image indicating a movement direction of the content, when the reproduction portion of the content is moved into the display portion.

5. The display device of any one of claims 3 and 4, wherein the at least one processor is further configured to determine at least one speaker from among a plurality of speakers connected to the display device, based on a movement position of the reproduction portion of the content, and output an audio signal of the content through the determined at least one speaker.

6. The display device of any one of claims 3 to 5, wherein the at least one processor is further configured to:
reproduce the content within a channel selection portion, when the user input for displaying the list of the plurality of pieces of content is received; and
after moving the reproduction portion of the content into the display portion, move the reproduction portion of the content to the channel selection portion again, when a user's scroll input for having the channel selection portion appear again is received.

7. The display device of any one of claims 3 to 6, wherein the at least one processor is further configured to:
change focus content that is focused from among the plurality of pieces of content, when the user input for scrolling the list of the plurality of pieces of content is received; and
determine a size of the reproduction portion and a position of the reproduction portion such that the focus content and the reproduction portion of the content do not overlap each other and, based on the determined size and position of the reproduction portion, move the reproduction portion of the content into the display portion.

8. The display device of any one of claims 1 to 7, wherein the at least one processor is further configured to:
when the user input for displaying the list of the plurality of pieces of content is received, display an icon of an application providing the pieces of content, together with the list of the plurality of pieces of content; and
when a user input of selecting the icon of the application is received, reproduce the content received from the identified channel, together with a list of pieces of content provided by the application.

9. The display device of any one of claims 1 to 8, wherein the at least one processor is further configured to:
identify a day of a week and a time at which the user input is received;
identify a source device providing most recent broadcasting content that is output on the identified day of the week and at the identified time and a channel of the output broadcasting content; and
reproduce, by controlling the identified source device, content of the channel of the most recent broadcasting content that is output on the identified day of the week and at the identified time, on the at least the portion.

10. The display device of any one of claims 1 to 9, wherein the at least one processor is further configured to, based on data received from the plurality of source devices, identify a device transmitting electronic program guide (EPG) information as one or more source devices providing the pieces of broadcasting content and identify, from among the identified one or more source devices, the source device providing the broadcasting content most recently output through the display.

11. A method, performed by a display device, of providing broadcasting content, the method comprising:
receiving a user input for displaying a list of a plurality of pieces of content which may be reproduced through the display device;
identifying a source device providing broadcasting content that is most recently output through a display from among a plurality of source devices connected to the display device and a channel of the broadcasting content that is most recently output; and
displaying a screen including the list of the plurality of pieces of content when the user input is received, and reproducing, by controlling the identified source device, content of the channel of the broadcasting content that is most recently output, on at least a portion of the screen.

12. The method of claim 11, wherein the list of the plurality of pieces of content includes a list of pieces of broadcasting content received from a plurality of channels, and
the reproducing of the content of the channel of the broadcasting content most recently output comprises displaying the content received from the channel of the broadcasting content most recently output from among the plurality of channels, preferentially to the pieces of content received from remaining channels.

13. The method of any one of claims 11 and 12, further comprising:
receiving a user input for scrolling the list of the plurality of pieces of content; and
when a reproduction portion of the content deviates from a display portion of the display while the list of the plurality of pieces of content is being scrolled, moving the reproduction portion of the content into the display portion.

14. The method of claim 13, wherein the moving of the reproduction portion of the content into the display portion comprises displaying an image indicating a movement direction of the content, when moving the reproduction portion of the content into the display portion.

15. The method of any one of claims 13 and 14, further comprising determining at least one speaker from among a plurality of speakers connected to the display device, based on a movement position of the reproduction portion of the content, and output an audio signal of the content through the determined at least one speaker.
